# EUROPEAN PATENT APPLICATION

(11) **EP 4 485 624 A1**
(43) Date of publication of application: **01.01.2025**
(21) Application number: 23907801.7
(22) Date of filing: 21.12.2023
(51) Int. Cl.: H01M 10/655, H01M 10/653, H01M 50/103, H01M 50/105, H01M 50/107, H01M 50/20

(54) **BATTERY PACK WITH EASY DISASSEMBLY**

(30) Priority: 23.12.2022 KR 20220182832
(71) Applicant: LG Energy Solution, Ltd., Seoul 07335 (KR)
(72) Inventor: JU, Eun Ah, Daejeon 34122 (KR); KANG, Dal Mo, Daejeon 34122 (KR); SEO, Sung Won, Daejeon 34122 (KR); YUN, Hyeon Ki, Daejeon 34122 (KR); CHI, Ho June, Daejeon 34122 (KR)
(74) Representative: Hoffmann Eitle
(86) International application number: PCT/KR2023/021246
(87) International publication number: WO 2024/136518

(57) **Abstract**

Disclosed is an easy-to-disassemble battery pack configured to have a structure in which an insulating film is added between a thermal resin and a heat sink such that a lower part of the battery pack is separable from a battery cell while the lower part of the battery pack is fixed in tight contact with the battery cell for heat transfer.

## Description

### [Technical Field]

This application claims the benefit of priority to Korean Patent Application No. 2022-0182832 filed on December 23, 2022, the disclosure of which is incorporated herein by reference in its entirety.

The present invention relates to an easy-to-disassemble battery pack. More particularly, the present invention relates to an easy-to-disassemble battery pack configured such that a lower part of the battery pack is separable from a battery cell while the lower part of the battery pack is fixed in tight contact with the battery cell for heat transfer.

### [Background Art]

A secondary battery is constituted by a battery module including a plurality of battery cells connected to each other in series and/or parallel depending on the required output voltage or charge/discharge capacity or a battery pack including battery modules connected to each other.

A pouch-shaped battery having a stacked type electrode assembly or a stacked and folded type electrode assembly mounted in a pouch-shaped battery case made of a laminate sheet is often used in battery modules or battery packs due to low manufacturing cost and high energy density thereof.

A laminated sheet including an outer covering layer, a metal blocking layer, and an inner adhesive layer is generally shaped so as to be used as a battery case of the pouch-shaped battery. An electrode assembly and an electrolyte solution are received in a receiving portion formed in the laminate sheet, and the laminate sheet is sealed to manufacture the pouch-shaped battery.

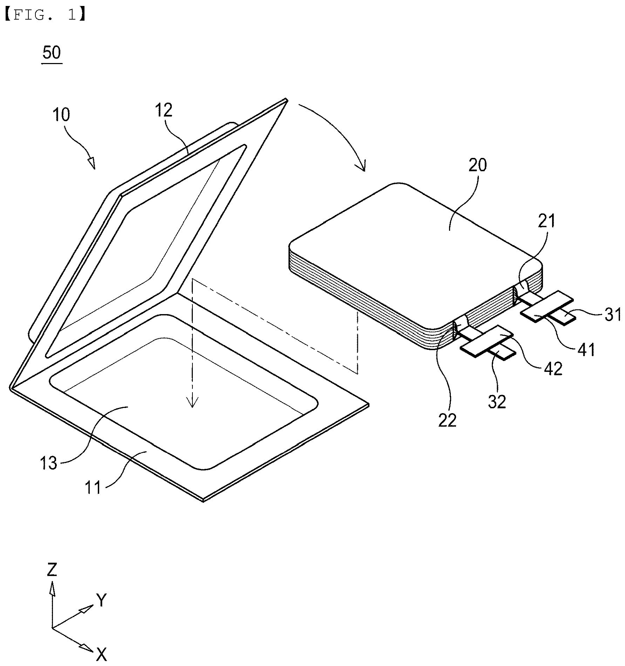

As shown in FIG. 1, a pouch-shaped battery 50 has an electrode assembly 20 mounted in a receiving portion 13 of a battery case 10 constituted by a pouch-shaped lower part 11 and a pouch-shaped upper part 12. Positive and negative electrode tabs 21 and 22 of the electrode assembly 20 are welded respectively to two electrode leads 31 and 32, which are exposed out of the battery case 10. The outer periphery of the case 10 is sealed in the state in which a pair of insulating films 41 and 42 is disposed on an upper side and a lower side of the electrode leads 31 and 32.

FIG. 1 shows an example in which the positive and negative electrode tabs 21 and 22 are located in the same direction. That is, in FIG. 1, the positive and negative electrode tabs 21 and 22 are located only in a +x direction of a plane parallel to a yz plane of the electrode assembly 20. If the positive and negative electrode tabs 21 and 22 are located in different directions of the electrode assembly 20, i.e., +x and -x directions of the plane parallel to the yz-plane of the electrode assembly 20 in FIG. 1, respectively, a folding edge of the battery case, e.g., a folding edge located on a y-axis in FIG. 1, is rotated counterclockwise or clockwise and is located on the x-axis.

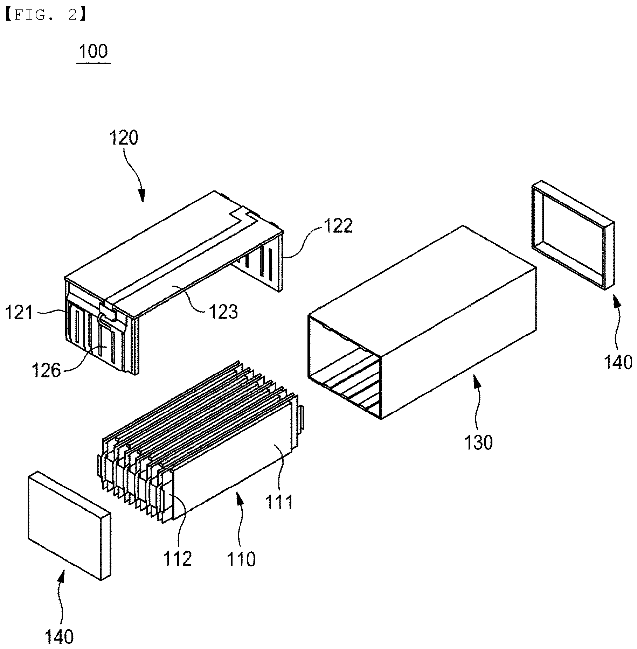

FIG. 2 is a perspective view of a pouch-shaped battery 60 with a positive electrode tab and a negative electrode tab located at opposite sides. Referring to FIG. 2, the pouch-shaped battery or battery cell 60 includes an upper cell case part 62, a lower cell case part 61, an electrode assembly (not shown) received in the upper cell case part and the lower cell case part, a sealed portion 65 formed at edges of the upper cell case part and the lower cell case part, a pair of electrode tabs (not shown), a pair of electrode leads constituted by a positive electrode lead 66 and a negative electrode lead 67, one side of each of which is electrically connected to a corresponding one of the electrode tabs and the other side of each of which protrudes outward from the cell case, and an insulating film (not shown).

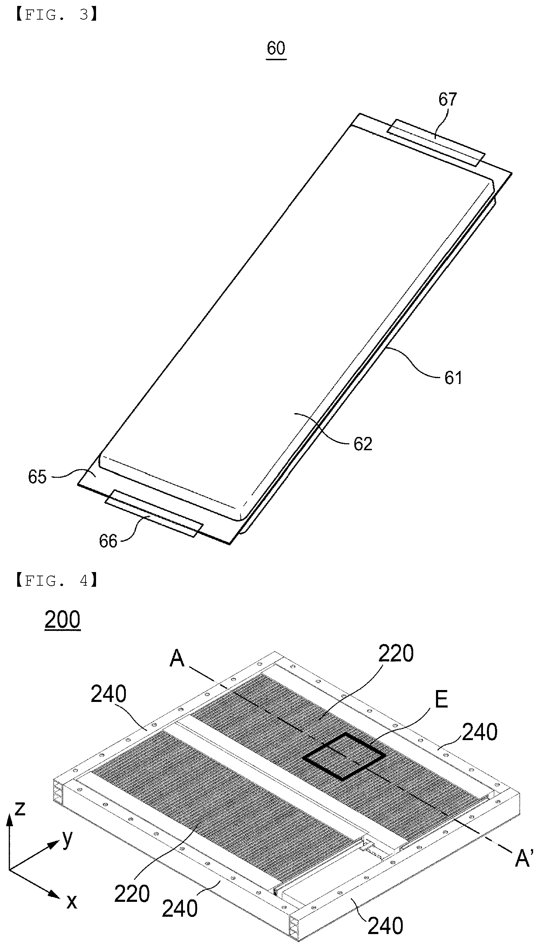

FIG. 3 is an exploded perspective view schematically showing the structure of a conventional battery module 100. Referring to Figure 3, the battery module 100 includes a pouch-shaped battery cell assembly 110 constituted by a stack of pouch-shaped battery cells 111 having bidirectional electrode leads 112, a busbar frame 120 constituted by a first vertical plate 121 and a second vertical plate 122 disposed respectively at opposite side surfaces of the pouch-shaped battery cell assembly 110 so as to correspond in position to the electrode leads 112 of the pouch-shaped battery cells 111 and an upper plate 123 connected to the first vertical plate 121 and the second vertical plate 122, the upper plate being disposed above the pouch-shaped battery cell assembly 110, and a monoframe 130 configured to allow the pouch-shaped battery cell assembly 110 having the busbar frame 120 mounted thereto to be inserted into and disposed in an inner space thereof, the monoframe being formed in the shape of a square pipe. A side frame 140 is coupled to the monoframe 130 to complete the battery module 100.

A general battery pack is manufactured by manufacturing a battery module using a plurality of battery cells and connecting a plurality of battery modules to each other. After battery cells are manufactured, battery modules are manufactured by a separate manufacturer or on a separate assembly line, and the battery modules are connected to each other to constitute battery packs. Each battery module has an individual case for insulation and safety, which occupies space and increases weight.

In recent years, a simplified battery module with partially exposed battery cells or a cell to pack (CTP), in which battery cells are directly assembled to a battery pack, has been used in order to maximize the efficiency of an assembly process and energy. A heat sink is added to a lower part of a battery module and/or a battery pack in order to quickly dissipate heat discharged from the battery module and/or the battery pack during charging and discharging. Such a battery module and/or battery pack uses a thermal resin for thermal conduction and adhesive purposes in order to allow the battery cells and the heat sink to come into tight contact with each other and to fix the battery cells. Although the surface area in contact with the battery cells increases due to fully tight contact therebetween, it is very difficult to separate the battery cells from the battery module and/or the battery pack, since the battery cells are fixed to the lower part of the cell pack. In the case of a pouch-shaped battery cell, it is substantially impossible to separate the battery cell intact, since the thermal resin is cured after being adhered.

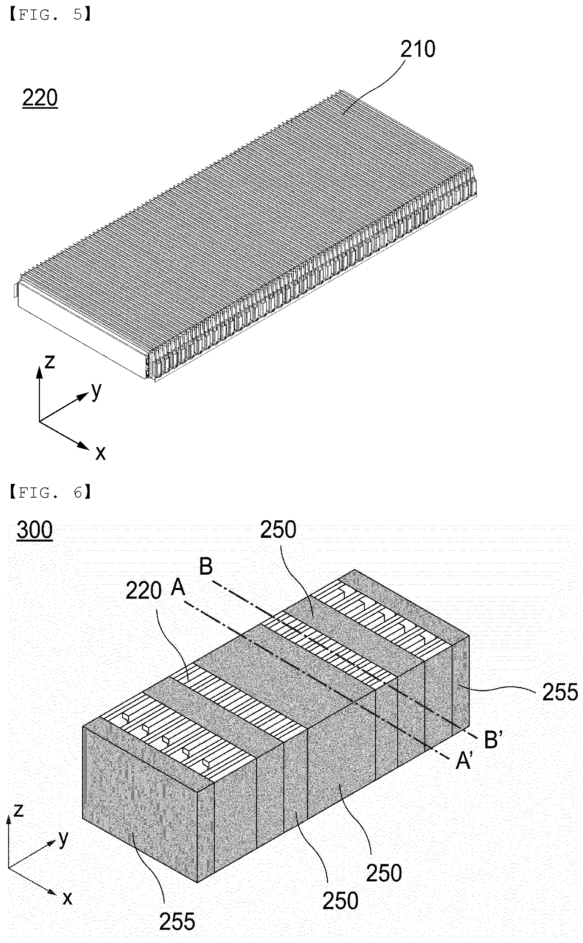

FIG. 4 is a perspective view of a battery pack 200 with an upper plate removed as an example of a CTP, and FIG. 5 is a perspective view of a battery cell stack 220 used in the battery pack 200 of FIG. 4. As shown in FIG. 5, a plurality of battery cells 210 are stacked to constitute a battery cell stack 220, which is disposed in a pack frame 240. In FIG. 4, two battery cell stacks 220 are disposed, which may be changed as needed.

FIG. 6 is a perspective view of a conventional simplified battery module 300. A battery cell stack 220 is surrounded by a module frame 250 and a busbar case 255. In the busbar case 255, leads of battery cells are connected to a busbar.

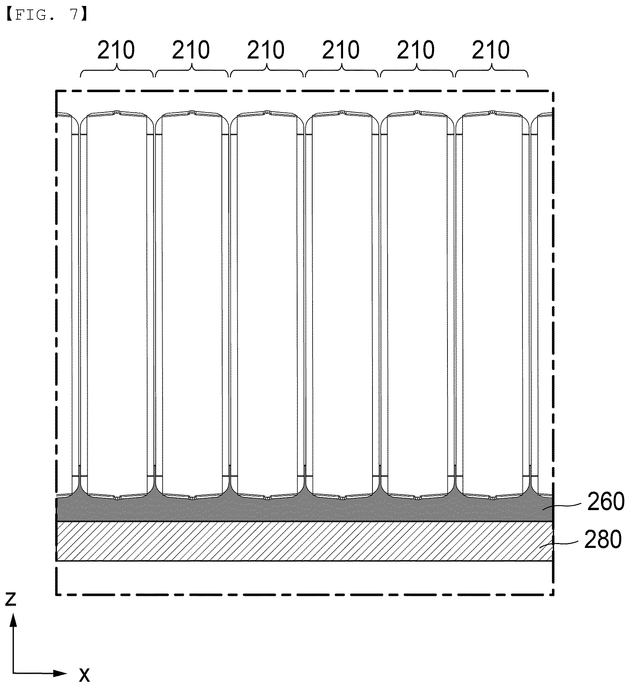

FIG. 7 shows only a part E of a vertical section taken along line AA' of FIG. 4. The xz coordinate in FIG. 4 and the xz coordinate in FIG. 7 are the same. Referring to FIG. 7, battery cells 210, particularly a plurality of pouch-type battery cells erected vertically (z), are stacked in a horizontal direction x. A heat sink 280 is fixed to the bottoms of the battery cells 210 via a thermal resin 260 used for thermal conduction and adhesive purposes.

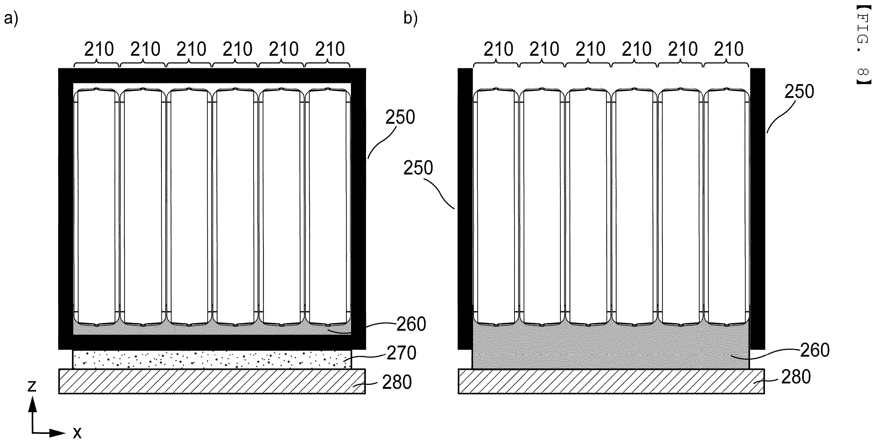

FIG. 8 is a view of a conventional simplified battery module 300 shown in the form of FIG. 7. The xz coordinate in FIG. 6 and the xz coordinate in FIG. 8 are the same. a) of FIG. 8 is a vertical sectional view taken along line AA' of FIG. 6, and b) of FIG. 8 is a vertical sectional view taken along line BB' of FIG. 6. FIG. 8 is similar to FIG. 7, wherein the battery cells 210 are surrounded by a module frame 250. In a) of FIG. 8, in which the module frame 250 is also disposed at the bottoms of the battery cells, a thermal resin 260 is disposed between the battery cells 210 and the module frame 250 to fix the battery cells and the module frame, and a thermal pad 270 and a heat sink 280 are disposed under the module frame. In b) of FIG. 8, in which the module frame 250 is disposed only at side surfaces of the battery cells, a heat sink 280 is fixed to the bottoms of the battery cells via a thermal resin 260 used for thermal conduction and adhesive purposes. As a result, it is difficult to separate the simplified battery module 300, as in FIG. 7.

Patent Document 1 relates to a battery module, a battery pack including the battery module, and a vehicle including the battery pack. The battery module according to Patent Document 1 includes at least one battery cell, a module case configured to receive the at least one battery cell, a heat sink mounted to one side of the module case, the heat sink being configured to cool the at least one battery cell, and a foam member provided between the heat sink and the at least one battery cell, the foam member being disposed on one surface of the at least one battery cell in contact therewith.

Patent Document 1 needs improvement in the following ways. 1) The contact area is very important for thermal conduction. If a heat transfer medium does not directly contact a heat source, an air layer is formed therebetween, and since the air layer has very low thermal conductivity, heat transfer efficiency is reduced sharply. The foam member must be thick enough to make contact with all unstructured parts of the bottom of the pouch-shaped battery cell 210, as shown in FIG. 6. An increase in thickness of the foam member increases the length of heat transfer, which reduces heat transfer efficiency. Recently, due to this problem, the foam member is not applied to the unstructured part but to a flat surface, e.g., a side surface of the pouch-shaped battery cell.

2) Even though a thick material is used, the foam member must be continuously pressurized at a certain pressure or higher to allow the foam member to be deformed and contact all parts. Without pressurization, the contact area is reduced by the resilience of the foam member. Therefore, the battery cell stack must be pressurized at a certain pressure or higher in the CTP, and a means configured to maintain the pressure must be provided. In the CTP in which assembly up to the upper plate has been completed, if a gap is formed between the upper plate and the battery cell stack, there is no pressurizing pressure or pressurization is not performed to a desired extent, whereby heat transfer efficiency is reduced sharply.

3) Even though the foam member is pressurized at an intended pressure or higher and comes into contact with all parts, there is a difference in the degree of compression of the foam member in each part. Due to the unstructured shape thereof, the foam member is compressed more in some parts and less in others. This results in different densities between the parts, and thermal conduction efficiency is also less uniform. Since the microstructure of the foam member is porous, parts that have been substantially less compressed may have low thermal conduction efficiency. If the thermal conduction efficiency of a part subjected to high heat is lower than the thermal conduction efficiency of the other parts, the likelihood of fire is increased due to the localized heat island effect. In the case of a CTP for energy maximization, all of the battery cells in the battery cell stack are sometimes connected to each other in series, resulting in very high voltage, and therefore the amount of heat generated is much higher than the amount of heat generated in a conventional battery cell stack. The localized heat island effect may lead to a very dangerous situation.

In Patent Document 1, the foam member may be impregnated with a thermal resin, but this case also inherently has the disadvantages of the foam member.

Patent Document 2 relates to a cooling structure of a battery. In Patent Document 2, a cooling surface 14a of a battery module 13 including a plurality of stacked battery cells 14 may be supported by a cooling plate 12 to cool the battery cells by transferring heat of the battery module 13 from the cooling surface 14a to the cooling plate 12. A non-conductive insulating sheet 22 is disposed between the cooling surface 14a of the battery module 13 and the cooling plate 12. Patent Document 2 does not recognize the contact area that Patent Document 1 recognizes as a problem, and therefore the above configuration is not suitable for a CTP configured for energy maximization. Patent Document 2 considers the cooling surface and only considers contact of a flat surface.

Patent Document 3 relates to a battery module having secured insulation performance and a battery pack including the same. Patent Document 3 includes a battery cell stack constituted by a plurality of stacked battery cells, a module frame configured to receive the battery cell stack, and first and second thermal resin layers formed between a bottom portion of the module frame and the battery cell stack so as to be spaced apart from each other, wherein a first insulating coating layer is formed between the first thermal resin layer and the second thermal resin layer.

In Patent Document 3, insulation performance is focused, and the thermal resin layer is formed on the bottom portion of the module frame while the insulating coating layer is formed on the part where no thermal resin layer is formed, i.e., the part where no resin is applied, to secure insulation performance. Patent Document 3 is applied to a general battery module, as shown in FIG. 2, and has a similar configuration to FIG. 7. Patent Document 3 cannot solve the problem of the present invention because it is difficult to separate the module case and the battery cell stack due to the thermal resin layer formed on the bottom portion of the module frame. In addition, a plurality of resin layers is formed, whereby there are many thermal conduction media, which is not suitable for products with high heat generation.

Patent Document 4 relates to a composite sheet and a battery pack using the same. In Patent Document 4, a plurality of thermally conductive sheets and a plurality of insulating sheets are provided. Patent Document 4 has an area of good thermal conductivity and an area of good insulation, which is not suitable for a CTP for energy maximization.

Patent Document 5 relates to a battery module and a battery pack including the same. Patent Document 5 includes a battery cell stack constituted by a plurality of stacked battery cells, a module frame configured to receive the battery cell stack, a thermal resin layer located between a lower surface of the module frame and the battery cell stack, and a first adhesive layer located between neighboring ones of the plurality of battery cells, wherein the module frame is provided in a lower surface thereof with an injection hole configured to allow a thermal resin to be injected therethrough, and the first adhesive layer is formed adjacent to the thermal resin layer. Patent Document 5 has a configuration as shown in FIG. 7, which is not suitable for a CTP for energy maximization.

Configurations are not yet available for a simplified battery module with partially exposed battery cells or a cell to pack (CTP), in which battery cells are directly assembled to a battery pack, in order to maximize efficiency of an assembly process and energy, and wherein 1) a uniform density of contact on all surfaces of unstructured battery cells is achieved to provide uniform thermal conduction efficiency, 2) it is not necessary to apply separate pressure for contact with the surfaces of the unstructured battery cells, 3) the distance from a heat sink is minimized while the above conditions are maintained, 4) insulation performance is maintained even with minimal thickness, and 5) the entirety of a battery cell stack is easily removed from a battery pack.

### (Prior Art Documents)

(Patent Document 1) Korean Patent Application Publication No. 2017-0107800
(Patent Document 2) Japanese Patent Application Publication No. 2013-122818
(Patent Document 3) Korean Patent Application Publication No. 2021-0120558
(Patent Document 4) Japanese Registered Patent Publication No. 6982738
(Patent Document 5) Korean Patent Application Publication No. 2021-0058109

### [Disclosure]

### [Technical Problem]

The present invention has been made in view of the above problems, and it is an object of the present invention to provide configurations wherein 1) a uniform density of contact on all surfaces of unstructured battery cells is achieved to provide uniform thermal conduction efficiency, 2) it is not necessary to apply separate pressure for contact with the surfaces of the unstructured battery cells, 3) the distance from a heat sink is minimized while the above conditions are maintained, 4) insulation performance is maintained even with minimal thickness, and 5) the entirety of a battery cell stack is easily removed from a battery pack for a simplified battery module with partially exposed battery cells or a cell to pack (CTP), in which battery cells are directly assembled to a battery pack, in order to maximize efficiency of an assembly process and energy.

### [Technical Solution]

In order to accomplish the above object, the present invention provides a battery pack including a battery cell stack including at least one battery cell, a heat transfer portion disposed in direct contact with the battery cell of the battery cell stack, the heat transfer portion being configured to transfer heat, and a heat sink disposed so as to face the heat transfer portion, the heat sink being configured to discharge the heat to the outside, wherein an insulating film is disposed between the heat transfer portion and the heat sink, and the heat transfer portion includes a thermal resin.

In addition to the thermal resin, a material configured to improve heat conduction, such as carbon nanotubes, may be further added to the heat transfer portion. The additional material may improve heat conduction while exhibiting low electrical conductivity.

The thermal resin may be bonded to at least one surface of the battery cell stack, and specifically the thermal resin may be bonded to a lower surface of the battery cell stack. The thermal resin may also be bonded to an upper surface of the battery cell stack. In this case, the insulating film may be disposed at an upper surface of the thermal resin, and the heat sink may be disposed at an upper surface of insulating film.

The thermal resin may be bonded to the entirety of the lower surface of the battery cell stack, and the outermost part of the lower surface of the battery cell stack having the thermal resin bonded thereto may be flat.

The insulating film may face each of the heat transfer portion and the heat sink and may be bonded to only one thereof. Specifically, the insulating film may be bonded to only the heat transfer portion.

The thermal resin may be a liquid adhesive and may be at least one of a urethane-based resin, a silicone-based resin, an acrylic-based resin, and an epoxy-based resin.

The insulating film may be a film including at least one of PET, PE, and urethane.

The battery cell may be one of a cylindrical battery cell, a prismatic battery cell, and a pouch-shaped battery cell.

The battery pack may be a cell to pack (CTP) configured such that a battery cell is directly assembled to a battery pack or a simplified battery module with a partially exposed battery cell.

In addition, the present invention may provide combinations of the above solving means.

### [Advantageous Effects]

For a simplified battery module with partially exposed battery cells or a cell to pack (CTP), in which battery cells are directly assembled to a battery pack, in order to maximize efficiency of an assembly process and energy, the present invention has the following effects.
1) A uniform density of contact on all surfaces of unstructured battery cells is achieved to provide uniform thermal conduction efficiency.
2) It is not necessary to apply separate pressure for contact with the surfaces of the unstructured battery cells. In a CTP in which assembly up to an upper plate has been completed, heat transfer efficiency is not affected even though there is a gap between the upper plate and a battery cell stack.
3) The distance from a heat sink is minimized while the above conditions are maintained, whereby it is possible to reduce the size and to improve heat transfer efficiency.
4) Insulation performance between the battery cell stack and a pack frame and a pack plate may be maintained even with minimal thickness.
5) It is possible to easily separate the battery cell stack from the battery pack in an intact form without damage to the battery cell stack. This facilitates future repair and maintenance.

### [Description of Drawings]

FIG. 1 is an exploded perspective view of a conventional pouch-shaped battery.
FIG. 2 is a perspective view of a pouch-shaped battery with a positive electrode tab and a negative electrode tab located at opposite sides.
FIG. 3 is an exploded perspective view schematically showing the structure of a conventional battery module.
FIG. 4 is a perspective view of a battery pack with an upper plate removed as an example of a CTP.
FIG. 5 is a perspective view of a battery cell stack used in the battery pack of FIG. 4.
FIG. 6 is a perspective view of a conventional simplified battery module.
FIG. 7 is a partial vertical sectional view taken along line AA' of FIG. 4.
FIG. 8 is a view of a conventional battery module shown in the form of FIG. 6.
FIG. 9 is a partial vertical sectional view of a CTP according to the present invention.
FIG. 10 is a partial vertical sectional view of the CTP according to the present invention, separated from a heat sink.
FIG. 11 is a sectional view of a simplified battery module according to the present invention.
FIG. 12 is a schematic view showing application of a thermal resin.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, any limitations or additions to any embodiment described herein are not limited to a specific embodiment but are equally applicable to all embodiments described herein.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the drawings.

FIG. 3 is a perspective view of a pouch-shaped battery with a positive electrode tab and a negative electrode tab located at opposite sides. Referring to FIG. 3, the pouch-shaped battery or battery cell 60 includes an upper cell case part 62, a lower cell case part 61, an electrode assembly (not shown) received in the upper cell case part and the lower cell case part, a sealed portion 65 formed at edges of the upper cell case part and the lower cell case part, a pair of electrode tabs (not shown), a pair of electrode leads constituted by a positive electrode lead 66 and a negative electrode lead 67, one side of each of which is electrically connected to a corresponding one of the electrode tabs and the other side of each of which protrudes outward from the cell case, and an insulating film (not shown).

Specifically, each of the upper cell case part 62 and the lower cell case part 61 is provided with a pouch-shaped space portion configured to receive the electrode assembly.

The space portion configured to receive the electrode assembly is formed in the cell case using a laminate sheet constituted by an outer covering layer, a metal layer, and an inner covering layer.

The inner covering layer is disposed in direct contact with the electrode assembly, and therefore the inner covering layer must exhibit high insulation properties and high electrolytic resistance. In addition, the inner covering layer must exhibit high sealability in order to hermetically isolate the cell case from the outside, i.e., a thermally-bonded sealed portion between inner layers must exhibit excellent bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is preferably used.

The metal layer, which abuts the inner covering layer, corresponds to a barrier layer configured to prevent moisture or various kinds of gas from permeating into the battery from the outside. An aluminum thin film, which is lightweight and easily shapeable, may be used as a preferred material for the metal layer.

The outer covering layer is located at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer resin layer may be made of nylon or polyethylene terephthalate; however, the present invention is not limited thereto.

The electrode assembly, which is received in the upper cell case part 62 and the lower cell case part 61, may be classified as a stacked type electrode assembly, which is configured to have a structure in which a plurality of electrodes is stacked, a jelly-roll type electrode assembly, which is configured to have a structure in which a positive electrode and a negative electrode are wound in the state in which a separator is interposed therebetween, a laminated and stacked type electrode assembly, which is configured to have a structure in which a plurality of unit cells is stacked, or a stacked and folded type electrode assembly, which is configured to have a structure in which a unit cell is wound in a state of being located on a separator sheet.

In order to manufacture the laminated and stacked type electrode assembly and the stacked and folded type electrode assembly, a unit cell is manufactured, wherein the unit cell may be a mono-cell, which is configured to have a structure in which a separator is interposed between a positive electrode and a negative electrode, or a bi-cell, which is configured to have a structure in which a positive electrode, a negative electrode, and a positive electrode are stacked, or a negative electrode, a positive electrode, and a negative electrode are stacked, and a separator is interposed between the positive electrode and the negative electrode.

The electrode assembly according to the present invention may have a structure in which a negative electrode, a separator, a positive electrode, a separator, and a negative electrode are stacked. In addition, the number of positive electrodes and negative electrodes constituting the electrode assembly may be freely set. Furthermore, a laminated and stacked type electrode assembly, in which a plurality of unit cells is laminated, may be used. The structure of the electrode assembly may be applied to any of the electrode assemblies described herein.

A positive electrode tab and a negative electrode tab are provided respectively at the positive electrode and the negative electrode of the electrode assembly, and the pair of tabs is disposed so as to protrude outward from the cell case by a predetermined length in a state of being connected respectively to a positive electrode lead 66 and a negative electrode lead 67 by spot welding or the like.

The insulating film is located on an upper surface and a lower surface of each of the pair of electrode leads, more specifically on the sealed portion 65 at which the upper cell case part 62 and the lower cell case part 61 are thermally fused. The insulating film prevents electricity generated by the electrode assembly from flowing to the cell case through the electrode leads, and maintains a seal between the electrode leads and the cell case. The insulating film is preferably a non-conductive material that does not conduct electricity well, and an insulating tape, which is easily attached to the electrode leads and is relatively thin, is commonly used; however, the present invention is not limited thereto.

A pouch-shaped battery having electrode tabs located at opposite sides of an electrode assembly is mainly used in a battery module or a battery pack. A plurality of pouch-shaped batteries each having a positive electrode tab and a negative electrode tab located at opposite sides is vertically disposed to constitute a pouch-shaped battery assembly, and busbars configured to electrically connect the positive electrode tabs and the negative electrode tabs, specifically the positive electrode leads and the negative electrode leads, to each other is disposed at opposite ends of the pouch-shaped battery assembly. The busbars disposed at the opposite ends of the pouch-shaped battery assembly may be electrically connected to each other.

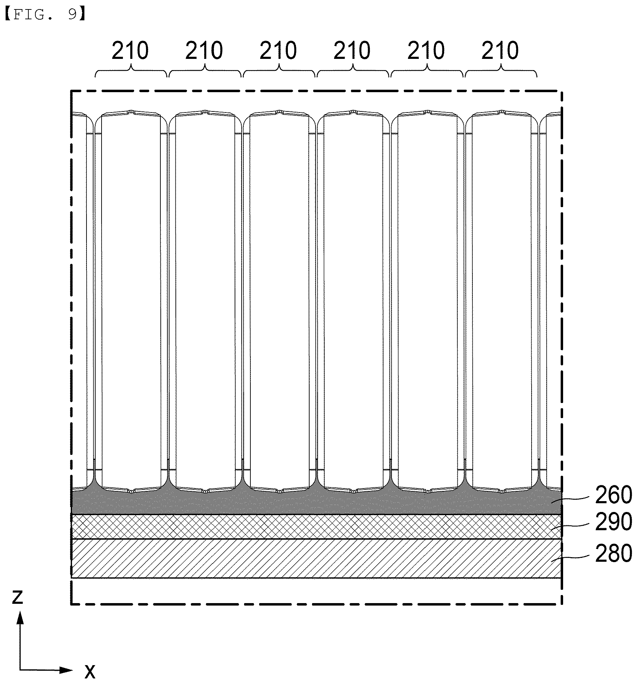

FIG. 9 is a partial vertical sectional view of a CTP according to the present invention. The battery cell stack according to the present invention is identical to a battery cell stack used in a conventional battery module or a conventional battery pack, and is identical to what is shown in FIG. 5. Referring to FIGs. 4, 5, and 9, the CTP according to the present invention is a cell to pack (CTP) including a battery cell stack 220 including at least one battery cell 210, a thermal resin 260 disposed in direct contact with the battery cell 210 of the battery cell stack 220 to transfer heat, and a heat sink 280 disposed so as to face the thermal resin 260 in order to discharge the heat to the outside, wherein an insulating film 290 is disposed between the thermal resin 260 and the heat sink 280. FIG. 9 shows an embodiment in which a heat transfer portion is constituted by the thermal resin 260 by way of example.

The thermal resin 260 is bonded to at least one surface of the battery cell stack 220, specifically to a lower surface of the battery cell stack 220.

The thermal resin is a liquid adhesive, which has similar thermal conductivity to a conventional foam pad. This is because the thermal resin may be manufactured using a material identical or similar to the material used in the foam pad. Since the liquid adhesive is used, it is possible to fully fill all unstructured parts of a lower surface of the battery cell stack with the liquid adhesive.

It may take about 24 or 48 hours to fully harden the liquid adhesive. This is the time until the liquid adhesive is fully hardened, and the liquid adhesive is initially hardened while the shape of the liquid adhesive is maintained for 2 to 8 hours. Some products may be fully hardened in 2 to 8 hours.

The thermal resin 260 is bonded to the entirety of the lower surface of the battery cell stack 220, and the outermost part of the lower surface of the battery cell stack 220 having the thermal resin 260 bonded thereto is flat.

When the liquid adhesive is used for the battery cell stack, the viscosity of the liquid adhesive is preferably 150 to 300 cP. In order to flatten the lower surface having the thermal resin 260 bonded thereto, 1) a method of placing an insulating film on a flat floor, applying a liquid adhesive thereto, placing a battery cell stack thereon, and pressing the battery cell stack or 2) a method of applying a liquid adhesive to only a region of an unstructured part of a battery cell stack that is in contact with a floor, disposing insulating film thereon, and disposing the same on a flat floor may be used.

Although the pouch-shaped battery cell has been described in the present invention, the present invention is not limited thereto, and a cylindrical battery cell or a prismatic battery cell may be used.

In order to reduce the thickness of the thermal resin, the thermal resin may be flattened from the most downwardly protruding region of the unstructured part of the battery cell stack to the outermost side thereof. If a large amount of liquid adhesive is used at once, the liquid adhesive may flow down before the liquid adhesive takes shape, and therefore the amount of the liquid adhesive may be adjusted or the shape of the liquid adhesive may be formed after partial hardening.

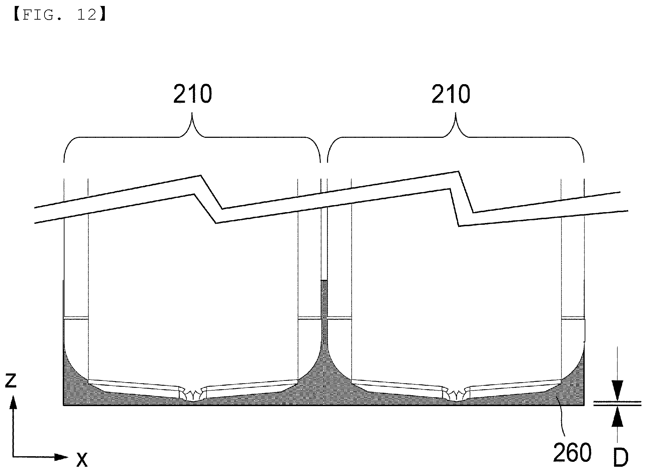

FIG. 12 is a schematic view showing application of a thermal resin. The thermal resin 260 is applied to the unstructured part of the battery cell stack, specifically each individual battery cell 210, from the most downwardly protruding region of the unstructured part of the battery cell stack to the outermost side thereof. At this time, the application thickness of the thermal resin 260 corresponding to the most downwardly protruding region is D.

In general, the application thickness of the adhesive is, but is not limited to, 0.5 mm to 3.0 mm. For a pouch-shaped battery cell, the center of a lower part of each individual battery cell is convex, and therefore the application thickness of the adhesive may be varied to fill all unstructured spaces caused by such a shape. Referring to FIG. 9, the battery cells 210, particularly the plurality of pouch-shaped battery cells erected vertically (z), are stacked in the horizontal direction x. Since the respective battery cells are not in fully tight contact with each other, it is not necessary to fill the gap therebetween with the adhesive. It can be seen from FIG. 12 that the empty space between the battery cells is partially filled with the adhesive.

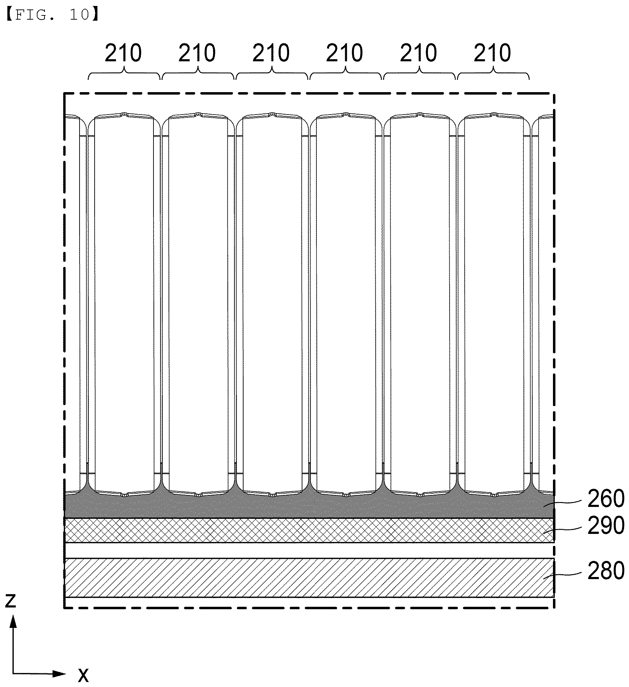

The lower surface of the battery cell stack may or may not be flat. The thermal resin is attached to the lower surface of the battery cell stack to flatten the outermost part of the lower surface of the battery cell stack. The thermal resin also serves to fill the irregular outer surface or the empty space of the battery cell stack or the battery. An insulating film 290 is attached to the thermal resin. A planar heat sink 280 is disposed under the insulating film 290 so as to face the insulating film, whereby face-to-face contact therebetween is facilitated. In addition, the insulating film 290 is not adhesive or sticky, and therefore the insulating film 290 is easily separated from the heat sink 280 for future separation. FIG. 10 shows only a part of the vertical section of the CTP according to the present invention, from which the heat sink 280 is separated.

The insulating film 290 faces each of the thermal resin 260 and the heat sink 280, and is bonded to only one of the thermal resin 260 and the heat sink. Specifically, the insulating film 290 is bonded to only the thermal resin 260. Although only the thermal resin 260 is shown here, this is an example of a heat transfer portion according to the present invention. The heat transfer portion according to the present invention includes a thermal resin, and may be constituted by only the thermal resin or may further include another thermally conductive material in addition to the thermal resin.

The thermal resin 260, which is a liquid adhesive, is at least one of a urethane-based, a silicone-based, an acrylic-based, and an epoxy-based resin. The silicone-based hardener is not suitable for products such as a vehicle because siloxane may be generated therefrom. The preferred liquid adhesive is the urethane-based adhesive because the urethane-based adhesive basically exhibits insulation performance and can be used in an enclosed space of a vehicle. In addition, the urethane-based adhesive exhibits high adhesion and high thermal conductivity. In order to further increase thermal conductivity, metal particles having high thermal conductivity may be added to the liquid adhesive.

The insulating film 290 is a film including at least one of PET, PE, and urethane. Any thin film may be used as the insulating film, and the insulating film may include at least one of PET, PE, and urethane. Since urethane is an insulating material, a urethane film is preferably used as the insulating film; however, the present invention is not limited thereto. In practice, the thickness of the film is less than the thickness of the thermal resin, and the thermal conductivity of the insulating film is not significantly different from the thermal conductivity of the thermal resin, whereby an insulating film having a thickness of 0.5 mm or less, preferably 0.2 mm or less, more preferably 0.1 mm or less, does not significantly affect thermal conduction.

As another configuration, an adhesive pad having a film already attached to the outside thereof may be used. The adhesive pad may be directly attached to the battery cell stack. However, the adhesive pad is preferably applied to the flat lower part of the battery cell stack.

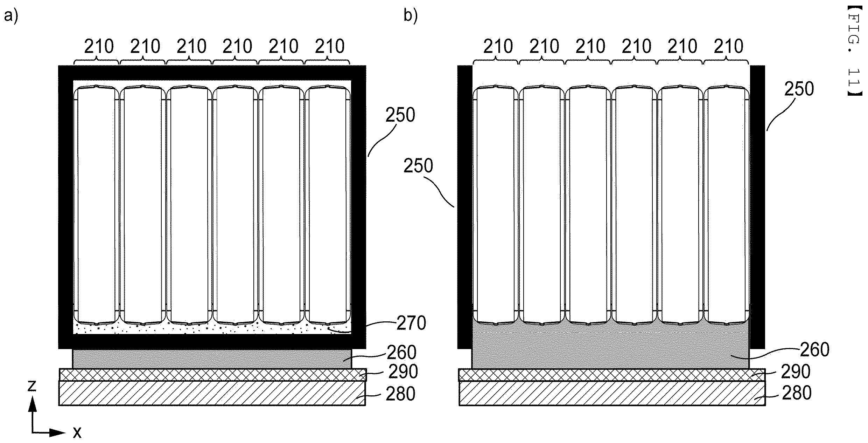

FIG. 11 is a sectional view of a simplified battery module according to the present invention. FIG. 11 is an improvement of FIG. 8. The configuration of a thermal resin 260, an insulating film 290, and a heat sink 280 and the coupling relationship therebetween are the same as in FIGs. 9, 10, and 12, and therefore only the differences will be described. a) of FIG. 11 is a vertical sectional view taken along line AA' and b) of FIG. 11 is a vertical sectional view taken along line BB', respectively, as in FIG. 8. In a) of FIG. 11, in which a module frame 250 extends to the bottoms of battery cells, a thermal pad 27 is disposed between the battery cells 210 and the module frame 250, which may be separated from each other in future. The thermal resin 260, the insulating film 290, and the heat sink 280 are disposed thereunder. In b) of FIG. 11, in which the module frame 250 is disposed only at side surfaces of the battery cells, the battery cells 210 and the insulation film 290 are attached to each other via the thermal resin 260 used for thermal conduction and adhesive purposes. The flat heat sink 280 faces the insulating film 290 under the insulating film, and the heat sink 280 may be easily separated due to the insulating film 290.

Those skilled in the art to which the present invention pertains will appreciate that various applications and modifications are possible within the category of the present invention based on the above description.

### (Description of Reference Symbols)

10: Battery case
11, 61: Lower parts
12, 62: Upper parts
13: Receiving portion
20: Electrode assembly
21, 22: Electrode tabs
31, 32, 66, 67: Electrode leads
41, 42: Insulating films
50, 60: Pouch-shaped batteries
65: Sealed portion
100: Battery module
110: Cell assembly
111: Pouch-shaped battery
112: Electrode lead
120: Busbar frame
121, 122: Vertical plates
123: Upper plate
126: Busbar
130: Monoframe
140: Side frame
200: CTP
210: Battery cell
220: Battery cell stack
240: Pack frame
250: Module frame
255: Busbar case
260: Thermal resin
270: Thermal pad
280: Heat sink
290: Insulation film
300: Simplified battery module
D: Application thickness of thermal resin
E: Selected part

## Claims

1. A battery pack comprising:
a battery cell stack comprising at least one battery cell;
a heat transfer portion disposed in direct contact with the battery cell of the battery cell stack, the heat transfer portion being configured to transfer heat; and
a heat sink disposed so as to face the heat transfer portion, the heat sink being configured to discharge the heat outside, wherein
an insulating film is disposed between the heat transfer portion and the heat sink, and
the heat transfer portion comprises a thermal resin.

2. The battery pack according to claim 1, wherein the thermal resin is bonded to at least one surface of the battery cell stack.

3. The battery pack according to claim 2, wherein the thermal resin is bonded to a lower surface of the battery cell stack.

4. The battery pack according to claim 3, wherein
the thermal resin is bonded to the entirety of the lower surface of the battery cell stack, and
an outermost part of the lower surface of the battery cell stack having the thermal resin bonded thereto is flat.

5. The battery pack according to claim 1, wherein the insulating film faces each of the heat transfer portion and the heat sink and is bonded to only one thereof.

6. The battery pack according to claim 5, wherein the insulating film is bonded to only the heat transfer portion.

7. The battery pack according to claim 1, wherein the thermal resin is a liquid adhesive and is at least one of a urethane-based resin, a silicone-based resin, an acrylic-based resin, and an epoxy-based resin.

8. The battery pack according to claim 1, wherein the insulating film is a film comprising at least one of PET, PE, and urethane.

9. The battery pack according to claim 1, wherein the battery cell is one of a cylindrical battery cell, a prismatic battery cell, and a pouch-shaped battery cell.

10. The battery pack according to any one of claims 1 to 9, wherein the battery pack is a cell to pack (CTP) configured such that a battery cell is directly assembled to a battery pack or a simplified battery module with a partially exposed battery cell.
